Europäisches Patentamt

European Patent Office

Office européen des brevets

(19)

(11) Publication number: **0 081 919**
**A1**

# (12) EUROPEAN PATENT APPLICATION

(21) Application number: **82306138.7**

(22) Date of filing: **18.11.82**

(51) Int. Cl.³: **G 01 N 1/28**

(30) Priority: **19.11.81 JP 184371/81**

(43) Date of publication of application: **22.06.83**
**Bulletin 83/25**

(84) Designated Contracting States: **DE FR GB**

(71) Applicant: **OLYMPUS OPTICAL CO., LTD.,**
**43-2, 2-chome, Hatagaya Shibuya-ku, Tokyo 151 (JP)**

(72) Inventor: **Tamagawa, Akira, c/o**
**Hirayama-Jutaku 224 1-7-7, Higashi-Hirayama, Hino-Shi**
**Tokyo (JP)**
Inventor: **Kano, Tokio, 2-42-26, Fujimidai Kunitachi-Shi,**
**Tokyo (JP)**

(74) Representative: **Jones, Colin et al, W.P. THOMPSON &**
**CO. Coopers Building Church Street, Liverpool L1 3AB**
**(GB)**

(54) **Test fluid preparation apparatus.**

(57) An injection-type test fluid preparation apparatus has a syringe (1) and a nozzle (7) which are adapted to inject a required amount of a sample of a corpuscular blood specimen (10) into a measuring tube (9) and to control an amount of a diluent (13) to be added thereto by injection through a nozzle (16) by means of a pump (11) while detecting concentration of the test fluid (20) in the measuring tube (9) which contains the required amount of the sample and the diluent added to the sample, so that a desired concentration of the test fluid can be obtained.

The syringe (1) and the pump (11) are controlled by a central processing unit (23) to which the reference information is fed from a keyboard (24) and which receives the output of a detector (22) upon which light transmitted through the test fluid (20) being diluted falls. The nozzle (7) is cleaned by a washing fluid (28) by means of a pump (27) which feeds the latter via valves (A₂) to the interior of the nozzle (7) and to spray nozzles (32).

ACTORUM AG

1.

## DESCRIPTION

## "TEST FLUID PREPARATION APPARATUS"

The present invention relates to a test fluid preparing apparatus, and more particularly, to such apparatus for obtaining a predetermined concentration of a test fluid by adding a diluent to a sample or the like.

By way of example, in the field of a blood analysis, a fluid, in which a blood corpuscle is suspended and which is to be used for either a reagent or a sample, has been prepared by sucking in and ejecting either a blood corpuscle-containing fluid of a desired concentration with a pipette or a blood corpuscle sample by means of a partial injector resorting to operations only for directly sucking and ejecting a fluid of a desired amount.

However, in case of mixing the blood corpuscle sample and its diluent in a given volumetric ratio with either such a pipette or a partial injector, the blood corpuscle sample being sucked in adheres to the inner wall thereof in a large amount, disadvantageously resulting in a decrease of the ejected amount compared with the sucked in amount and a variation in the ejected amount. Thus, the blood corpuscle-containing fluid prepared with either the pipette or the partial injector has in practice, a lower concentration than a desired value so that a precise analysis may not be performed. When the blood corpuscle-containing fluid having the lower concentration has been prepared, the following measures should be taken to make it a desired concentration. Namely, by applying a centrifuging operation (for example, for five minutes at 3000 rpm) to the fluid, a designated amount of its supernatant fluid is skimmed. Then the desired

2.

concentration must be obtained by agitating the remaining fluid again. These operations are troublesome and time-consuming. On the other hand, it may be considered to raise the concentration of the blood containing fluid by partially injecting an increment of the sample. It is impossible, however, to obtain precisely a desired concentration of the fluid since a partial injection operation of an infinitesimal amount of the sample cannot be effected precisely.

It is an object of the invention to provide a test fluid preparation apparatus which substantially eliminates the foregoing disadvantages and is adapted to prepare a test fluid of a desired concentration by a simple operation.

The injection-type test fluid preparing apparatus according to the invention is characterized by the provision of means for injecting a specimen sample into a container, means for injecting a diluent into the container, means for detecting concentration of the test fluid consisting of the sample and the diluent within the container, and means for controlling said sample injection means and said diluent injection means, so as to obtain a desired concentration of the test fluid in accordance with the concentration detected by said detecting means.

The apparatus first injects a sample and some diluent into the container. Next it measures the concentration of the test fluid thus obtained, and then injects an increment of the diluent to achieve substantially the desired concentration. Accordingly, it has the following advantages:

3.

(1) even though the concentration of the test fluid is inaccurate as a result of an indefinite amount of the sample remained by adhesion to the nozzle for injecting the sample, a test fluid of a precise concentration can be obtained by adding an increment of a diluent in accordance with the sample injected into the measuring tube to secure a given concentration, thus improving accuracy of an analysis using the test fluid thus obtained;

(2) a required amount of the test fluid can be prepared in a short time and therefore it is possible to minimize a change on standing of the sample or the like, thus permitting a high accuracy to be achieved in the result of an analysis employing the prepared test fluid; and

(3) as it features extremely simple and reliable use, an erroneous operation by an operator can be avoided.

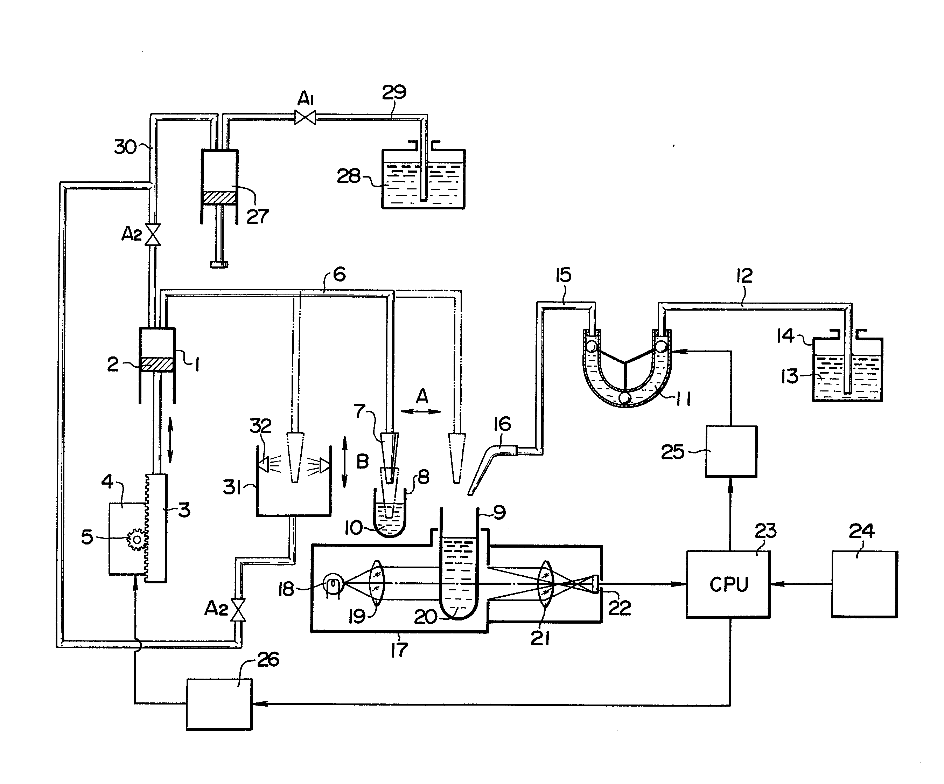

The invention is further described, by way of example, with reference to the accompanying drawing, which is a diagram illustrating one embodiment of the construction of a partial injection apparatus according to the invention.

In the figure, a syringe 1, which acts as an injector for a sample, has a piston 2 to which a rack 3 is connected. The rack 3 meshes with a pinion 5 which is driven by a motor 4. The syringe 1 is connected through a tube 6 to a nozzle 7. The tube 6

4.

and the nozzle 7 are movable over and between a specimen tube 8, a measuring tube 9 and a cleaning tank 31 in the directions of the arrows A and are movable up and down in the direction of the arrows B into and out of the specimen tube 8 and the cleaning tank 31 by means of a nozzle transfer mechanism (not shown). The end of the nozzle 7 can thereby be immersed in a corpuscular blood specimen 10 contained within the specimen tube 8.

One side of a pump 11, which acts as an injector for a diluent, is connected to a tube 12. The tube 12 is immersed in the diluent 13 contained within a diluent tank 14. The other side of the pump 11 is connected through a tube 15 to a nozzle 16 which is located over the measuring tube 9 so as to eject the diluent 13 thereinto.

The measuring tube 9 is disposed within a measuring chamber 17 in such a manner that light flux emitted from a light source 18 can be transmitted through a lens 19 and a test fluid 20 contained within the measuring tube 9. The concentration of the test fluid 20 can be measured by receiving the transmitted lightflux through a lens 21 by means of a photoelectric transducer element 22. The transducer element 22 is formed by, for example, SBC (silicon blue cell), the output of which is supplied to a central processing unit 23 (hereinafter abbreviated to as CPU). A keyboard 24, into which information as to a desired concentration and a required amount of the test fluid is inputted from the outside, is connected to the CPU 13. The CPU 23 is connected to

5.

a pump drive circuit 25 which drives the pump 11 as well as a motor drive circuit 26 which drives the motor 4. A pulse motor may be preferably used in place of a drive motor for the pump 11 so as to precisely control the rotational angle thereof. -

It will be seen that it is necessary to clean the nozzle 7, since a residue of the previous sample adheres thereto and if such residue were not removed, the subsequent suction of another sample would lead to contamination of that other sample. To this end, a tank 28 for containing cleaning liquid is provided so that the cleaning liquid can be sucked through a tube 29 and a solenoid valve $A_1$ by a cleaning pump 27 and further can be conducted through a tube 30 and two solenoid valves $A_2$, $A_2$ to the nozzle cleaning tank 31. The cleaning tank 31 has on its periphery a plurality of spray nozzles 32 for the cleaning liquid.

In operation, a required amount and a desired concentration of a test fluid to be prepared are inputted into the CPU 23 by means of the keyboard 24. First the end of the nozzle 7 is immersed into the blood corpuscle specimen 10 within the sample tube 8 and then the rack 3 is driven through a given distance by rotating the motor 4 by means of the motor drive circuit 26 in accordance with the concentration of the test fluid which is inputted into the CPU 23, thus resulting in suction of a given amount of the blood corpuscle specimen 10 by the syringe 1. Next the nozzle 7, after being lifted from the sample tube 8, is moved to the top of the measuring tube 9 and then a

6.

given amount of the blood corpuscle specimen 10 which has been sucked in by the syringe 1 is injected into the measuring tube 9. Then a diluent 13 is injected into the measuring tube 9 in succession with activation of the pump drive circuit 25 by the CPU 23. The blood corpuscle sample is diluted by diluent within the measuring tube 9 and a concentration value of the corpuscle sample is obtained as a voltage which is derived by the transducer element 22 on which light from the source 18 impinges after being transmitted through the test fluid. The derived voltage is delivered to the CPU 23 in which the desired concentration value has been stored as a voltage into which the desired concentration value has been converted as shown in Table 1. When the voltage derived by the transducer element 22 reaches the stored voltage, the pump drive circuit 25 is made inoperative to automatically stop the pump.

Table 1

|  | 0 | 1 | 2 | 3 | ·············· | 28 | 29 | 30 |
|---|---|---|---|---|---|---|---|---|
| Voltage mV | 80 | 75 | 72 | 70 | ·············· | 19 | 17 | 15 |
| Concentration % | 1.0 | 1.1 | 1.2 | 1.3 | ·············· | 3.8 | 3.9 | 4.0 |

Thus, it is possible to obtain a test fluid 20 of the desired concentration within the measuring tube 9.

For cleaning of the nozzle 7 after the sample has been partially ejected, the nozzle 7 is moved in the cleaning tank 31 by the nozzle transfer mechanism (not shown). First, cleaning liquid is sucked from the cleaning liquid tank 28 by activation of the pump 27 and opening the solenoid valve $A_1$. Subsequently, upon closing the valve $A_1$ and opening the valves $A_2$, $A_2$, the inside of the nozzle 7 is cleaned by ejecting the cleaning liquid upon activation of the pump 27 and simultaneously the outside thereof is cleaned with ejection from the spray nozzles 32 which are provided within the cleaning tank 31.

It should be understood that the construction of the cleaning pump and tubing system as described above is not restricted thereto.

Using the injection apparatus of the illustrated embodiment, a test fluid of a desired concentration can be further obtained by the following alternative procedure. The alternative procedure is conducted in the same way as the first procedure with respect to the steps for inputting a required amount and a desired concentration of test fluid into the CPU 23 and ejecting a given blood corpuscle sample into the measuring tube 9 in accordance with the inputted value. Subsequently, a porportion of the amount of a diluent 13, required for the fluid to be prepared, for example, a half, is ejected into the measuring tube 9 utilizing the pump drive circuit 25 and a voltage, derived by the transducer element 22 on which light transmitted through the test fluid from the source 18 impinges, is delivered to the CPU 23. It is presently assumed that an ejected amount of the sample is negligibly small compared with the amount of the diluent. The CPU 23 adopts a concentration value corresponding to a voltage in Table 1 which is closest to the measured voltage. Assuming that the concentration thus derived is x, the amount of the diluent already ejected into the measuring tube 9 is y and a desired concentration of the test fluid to be prepared is z, and increment of the diluent to be additionally injected is expressed as $\frac{x}{z} \cdot y - y$. Accordingly, if the pump 11 is controlled by the drive circuit 25 so that the diluent of an increment derived from the expression can be injected, a desired concentration of the test fluid within the measuring tube can be obtained and the total amount of the test fluid is extremely close to a desired value.

## CLAIMS.

1. An injection-type test fluid preparing apparatus for use in a blood analysis or the like, characterized by the provision of means (1,7) for injecting a sample of a specimen (10) into a container(9); means (11,16) for injecting a diluent (13) into said container (9); means (22) for detecting concentration of a test fluid (20) which is formed within the container (8) by said sample and said diluent so injected; and means (23, 25, 26) for controlling said sample injection means (1, 7) and said diluent injection means (11, 16) so as to obtain a desired value in concentration of said test fluid (20) in accordance with the concentration detected by said detecting means (22).

2. An apparatus according to claim 1 in which said sample injection means comprises a syringe (1) with piston (2) for sucking in and ejecting said sample, a drive mechanism (3, 4, 5) for driving said piston (2), a nozzle (7) for sucking in and ejecting said sample and a tube (6) for conducting said sample to be sucked in and ejected.

3. An apparatus according to claim 1 or 2, in which said diluent injection means comprises a diluent tank (14) for containing diluent (13), a pump (11) for sucking in the diluent from the diluent tank (14), a nozzle (16) for ejecting the sucked in diluent; and tubes (12, 15) for conducting the sucked diluent.

4. An apparatus according to claim 1, 2 or 3, in which the container (9) comprising a measuring tube for containing the test fluid (20) and for enabling

10.

optical measurement by transmitted light.

5. An apparatus according to claim 1, 2, 3 or 4, in which the detecting means comprises a light source (18), an optical system (19, 21) for passing light rays radiated from said light source (18) and a photoelectric transducer element (22) for receiving light rays transmitted through the test fluid within the container (9) via said optical system (19, 21).

6. An apparatus according to any of claims 1 to 5, in which the control means is provided with a keyboard (24) for inputting a designated concentration from the outside,and comprising a central processing unit (23) for effecting comparison, storage and operation with regard to said designated concentration and an output voltage from said detecting means (22) and drive circuits (25, 26) for controlling said sample injection means (1, 7) and said diluent injection means (11,16) in accordance with a result of the operation performed by said central processing unit (23).

**European Patent Office**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | G 01 N 1/28 |
| X | DE-A-2 748 013 (MILES LABORATORIES INC.) <br> * Claims 6, 14 ; figures 1, 4 * | 1-6 | |
| | --- | | |
| A | US-A-3 912 393 (M.G. HOSSOM et al.) <br> * Claim 1, figure * | 1-6 | |
| | ----- | | |

|  |
|---|
| **TECHNICAL FIELDS SEARCHED (Int. Cl. ³)** |
| G 01 N 1/00 |

The present search report has been drawn up for all claims

| Place of search <br> BERLIN | Date of completion of the search <br> 11-02-1983 | Examiner <br> SCHWARTZ K |
|---|---|---|

EPO Form 1503 03.82

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document